(19) Europäisches Patentamt
European Patent Office
Office européen des brevets

(11) EP 2 703 781 A2

(12) EUROPEAN PATENT APPLICATION

(43) Date of publication:
05.03.2014 Bulletin 2014/10

(51) Int Cl.:
*G01C 22/00* (2006.01)

(21) Application number: 13181323.0

(22) Date of filing: 22.08.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 03.09.2012 JP 2012193486

(71) Applicant: Seiko Instruments Inc.
Chiba-shi, Chiba (JP)

(72) Inventors:
• Ihashi, Tomohiro
Chiba-shi,, Chiba (JP)
• Takakura, Akira
Chiba-shi, Chiba (JP)
• Tsubata, Keisuke
Chiba-shi, Chiba (JP)
• Shimizu, Hiroshi
Chiba-shi, Chiba (JP)

(74) Representative: Miller Sturt Kenyon
9 John Street
London WC1N 2ES (GB)

(54) **Electronic apparatus and program**

(57) To measure a walking pitch or a running pitch more accurately with a simpler structure. Acceleration sensors 106 to 108 detect accelerations and output acceleration signals corresponding to the accelerations. A CPU 102 detects a cycle in which a user touches the ground at the time of walking or running based on the acceleration signal and calculating a first pitch based on the cycle of touching the ground. The CPU 102 also detects a cycle in which the user swings his/her arms based on the acceleration signal and calculates a second pitch based on the cycle of swinging arms. The CPU 102 determines either one of the first pitch and the second pitch which satisfies a given condition as a walking or running pitch of the user.

FIG. 9

EP 2 703 781 A2

## Description

BACKGROUND OF THE INVENTION

FIELD OF THE INVENTION

In related art, an electronic apparatus in which an acceleration sensor is mounted on an arm-portable electronic apparatus (particularly, a wrist-portable electronic apparatus like a wrist watch) to detect a walking pitch or a running pitch of a wearer is known. Generally, the direction of human arms largely differs at the time of walking and at the time of running. For example, a posture in which direction from an elbow to a wrist is directed to the ground tends to be taken at the time of walking. On the other hand, at the time of running, elbows are bent at approximately 90 degrees and the direction from the elbow to the wrist is directed to a traveling direction in many cases.

The direction of the wrist largely differs at the time of walking and at the time of running as described above, therefore, an acceleration direction to be detected also differs. Therefore, when the walking pitch or the running pitch is detected based on vibrations obtained when the user touches the ground at the time of walking or running, it is difficult to detect both the walking pitch and the running pitch by detecting the acceleration along one direction.

Accordingly, there is known an apparatus including two acceleration sensors which are an acceleration sensor detecting an acceleration along an arm-swing direction at the time of walking and an acceleration sensor detecting an acceleration along an arm-swing direction at the time of running, which detects both the walking pitch and the running pitch by performing frequency analysis (FFT analysis) to the accelerations detected by respective acceleration sensors to calculate accurate body movement components (for example, see JP-A-62-223616 (Patent Document 1). Additionally, there is known an apparatus including a 3-axis acceleration sensor and detecting the numbers of steps both at the time of walking and at the time of running based on a combined signal obtained by combining respective accelerations in three axial directions (for example, see JP-A-2005-038018 (Patent Document 2)).

However, as the frequency analysis is necessary to be performed in the method described in the cited document 1, there are problems that a price of the apparatus will be expensive when performing frequency analysis by hardware and that power consumption of the apparatus will be increased when performing frequency analysis by software. In the method described in the cited document 2, there is a problem that it is difficult to perform measurement accurately because the arm swing becomes hard as the running pitch is increased, which adds an arm-swing waveform component to a measurement result.

SUMMARY OF THE INVENTION

It is an aspect of the present application to provide an electronic apparatus and a program capable of measuring the walking pitch and the running pitch more accurately with simpler structure.

According to the application, there is provided an electronic apparatus including an acceleration sensor detecting an acceleration and outputting an acceleration signal corresponding to the acceleration, a first pitch calculation unit detecting a cycle in which a user touches the ground at the time of walking or running based on the acceleration signal and calculating a first pitch based on the cycle of touching the ground, a second pitch calculation unit detecting a cycle in which the user swings his/her arms based on the acceleration signal and calculating a second pitch based on the cycle of swinging arms and a pitch determination unit determining either one of the first pitch and the second pitch which satisfies a given condition as a walking or running pitch of the user.

In the electronic apparatus according to the application, the pitch determination unit may determine a pitch having the larger number of pitches in the first pitch and the second pitch as the walking or running pitch of the user.

Also in the electronic apparatus according to the application, the first pitch calculation unit may detect an interval in which the acceleration signal exceeds a first threshold value as the cycle of touching the ground and may calculate the cycle of touching the ground as the first pitch, and the second pitch calculation unit may detect an interval in which the acceleration signal exceeds a second threshold value as the cycle of swinging arms and may calculate the half of the cycle of swinging arms as the second pitch.

The electronic apparatus according to the application may further include a number-of-steps calculation unit calculating the number of steps based on the walking or running pitch of the user determined by the pitch determination unit.

Further in the electronic apparatus according to the application, the second pitch calculation unit may determine the second pitch as an abnormal value when the calculated second pitch is larger than a given threshold value.

Further in the electronic apparatus according to the application, the second pitch calculation unit may determine the second pitch which has been determined as an abnormal value as a normal value and resets the given threshold value when the second pitch which has been determined as the abnormal value continues for a given period of time.

According to another aspect of the application, there is provided a program for allowing a computer having an acceleration sensor to execute the steps of detecting an acceleration and outputting an acceleration signal corresponding to the acceleration, detecting a cycle in which a user touches the ground at the time of walking or running based on the acceleration signal and calculating a first pitch based on the cycle of touching the ground, detecting a cycle in which the user swings his/her arms based on the acceleration signal and calculating a second pitch based on the cycle of swinging arms and determining either one of the first pitch and the second pitch which satisfies a given condition as a walking or running pitch of the user.

According to the application, the acceleration sensor detects the acceleration and outputs the acceleration signal corresponding to the acceleration. The first pitch calculation unit detects the cycle in which a user touches the ground at the time of walking or running based on the acceleration signal and calculates the first pitch based on the cycle of touching the ground. The second pitch calculation unit detects the cycle in which the user swings his/her arms based on the acceleration signal and calculates the second pitch based on the cycle of swinging arms. The pitch determination unit determines either one of the first pitch and the second pitch which satisfies a given condition as the walking or running pitch of the user.

Accordingly, the first pitch based on the cycle of touching the ground and the second pitch based on the cycle of swinging arms can be calculated, and either one of the first pitch and the second pitch which satisfies the given condition can be determined as the walking or running pitch of the user, therefore, the walking pitch and the running pitch can be measured more accurately with a simpler structure.

BRIEF DESCRIPTION OF THE DRAWINGS

Embodiments of the present invention will now be described by way of further example only and with reference to the accompanying drawings, in which:

FIG. 1 is an outside view showing the outside of an electronic apparatus according to an embodiment of the invention;
FIG. 2 is a cross-sectional view showing a cross section of the electronic apparatus according to the embodiment;
FIG. 3 is a block diagram showing a configuration of the electronic apparatus according to the embodiment;
FIG. 4 is a schematic view showing directions of an X-axis direction, a Y-axis direction and a Z-axis direction in the case where the electronic apparatus is worn by a user and the user is walking in the embodiment;
FIG. 5 is a schematic view showing directions of the X-axis direction, the Y-axis direction and the Z-axis direction in the case where the electronic apparatus is worn by the user and the user is running in the embodiment;
FIG. 6 is a graph showing the magnitude of accelerations in the X, Y and Z directions detected by the electronic apparatus when the user is walking in the embodiment;
FIG. 7 is a graph showing the magnitude of accelerations in the X, Y and Z directions detected by the electronic apparatus when the user is running in the embodiment;
FIG. 8 is a flowchart showing a processing procedure of calculating pitches by the electronic apparatus according to the embodiment; and
FIG. 9 is a graph showing an example of pitches calculated by the electronic apparatus according to the embodiment.

DESCRIPTION OF THE PREFERRED EMBODIMENT

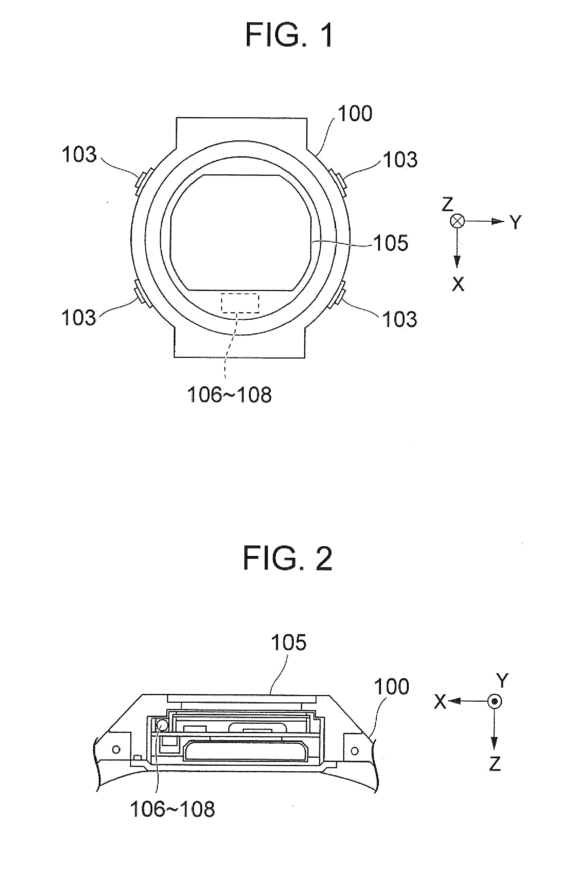

Hereinafter, an embodiment of the invention will be explained with reference to the drawings. In the embodiment, explanation will be made by using an example of a wrist-watch type electronic apparatus having a function of measuring pitches as an example of an electronic apparatus. Note that, a pitch is the number of steps in a given period of time. For example, the pitch is the number of steps in one minute. FIG. 1 is an outside view showing the outside of the electronic apparatus according to the embodiment. FIG. 2 is a cross-sectional view showing a cross section of the electronic apparatus according to the embodiment. In the example shown in FIG. 1 and FIG. 2, an electronic apparatus 100 includes a display unit 105 on an upper surface and an input unit 103 on a side surface. The electronic apparatus 100 also includes acceleration sensors 106 to 108 inside.

The display unit 105 includes a display surface, displaying measured time and the like on the display surface. The input unit 103 receives input from a user. The acceleration sensors 106 to 108 detect an X-component, a Y-component and a Z-component of orthogonal coordinate axes which are orthogonal to one another, outputting acceleration signals with the magnitude corresponding to accelerations of respective components.

In the embodiment, the acceleration sensor 106 detects acceleration X in an X-axis direction. The acceleration sensor 107 detects an acceleration Y in a Y-axis direction. The acceleration sensor 108 detects an acceleration Z in a Z-axis direction. In the embodiment, a plane which is the same as the display surface of the display unit 105 included in the electronic apparatus 100 is defined as an XY plane, and a direction perpendicular to the display surface of the display unit 105 is defined as the Z-axis direction. Note that the electronic apparatus 100 is shown as an example of a wrist-watch type electronic apparatus to be used by being worn on a user's arm.

It is also preferable that the acceleration sensors 106 to 108 are formed by, for example, one MEMS (micro electro mechanical systems) 3-axis acceleration sensor or formed by three 1-axial acceleration sensors arranged in three axial directions orthogonal to one another.

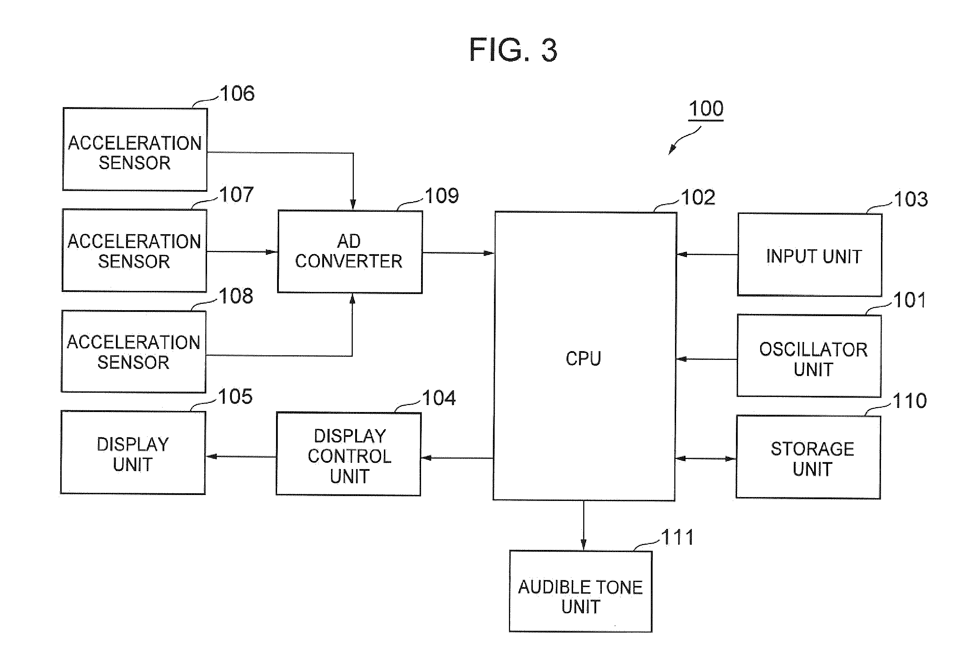

FIG. 3 is a block diagram showing a configuration of the electronic apparatus 100 according to the embodiment. In the shown example, the electronic apparatus 100 includes an oscillator unit 101, a CPU 102 (a central processing unit, a first pitch calculation unit, a second pitch calculation unit, a pitch determination unit, a number-of-steps calculation unit and a control unit), the input unit 103, a display control unit 104, the display unit 105, the acceleration sensors 106 to 108, an A/D converter 109, a storage unit 110 and an audible tone unit 111.

The oscillator unit 101 generates a reference clock signal for operating the CPU 102. The CPU 102 performs first-pitch calculation processing for calculating a first pitch, second-pitch calculation processing for calculating a second pitch, pitch determination processing for determining the pitch of the user in the first pitch and the second pitch, processing for calculating the number of steps, control of respective electronic circuit elements included in the electronic apparatus 100 and so on. The input unit 103 receives input of instructions from the user. The display control unit 104 displays a clocking value, a lap time, a split time, an hour and the like on the display unit 105 in response to control signals from the CPU 102. The display unit 105 is formed by a liquid crystal display (LCD), displaying the pitch indicating a walk/run interval, the number of steps and the like.

The acceleration sensors 106 to 108 detect the X-component, the Y-component and the Z-component of orthogonal coordinate axes which are orthogonal to one another, outputting acceleration signals with the magnitude corresponding to accelerations of respective components. The storage unit 110 stores programs executed by the CPU 102, data necessary in processes in which respective units included in the electronic apparatus 100 perform processing. In the embodiment, for example, the CPU 102 functions as the first pitch calculation unit, the second pitch calculation unit, the pitch determination unit and the number-of-steps calculation unit.

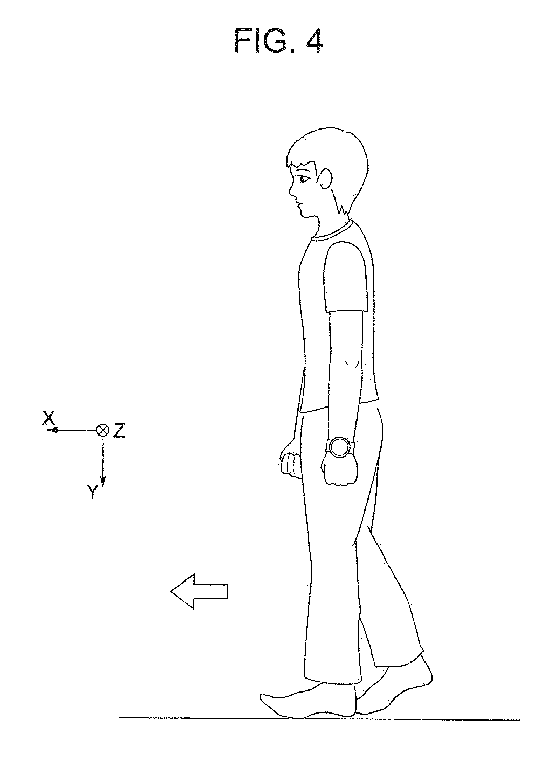

Next, directions of the X-axis direction, the Y-axis direction and the Z-axis direction in the case where the electronic apparatus 100 is worn by the user and the user is walking will be explained. FIG. 4 is a schematic view showing directions of the X-axis direction, the Y-axis direction and the Z-axis direction in the case where the electronic apparatus 100 is worn by the user and the user is walking in the embodiment. As shown in the drawing, when the electronic apparatus 100 is worn on the user's arm, a direction from an elbow toward the back of a hand is the Y-axis direction, a direction perpendicular to the back of the hand is the Z-axis direction and a direction perpendicular to a plane uniquely determined by the Y-axis direction and the Z-axis direction is the X-axis direction. When the user is walking, the user takes a posture in which the direction from the elbow toward a wrist is directed to the ground. Accordingly, the Y-axis direction almost corresponds to a vertical direction as shown in the drawing.

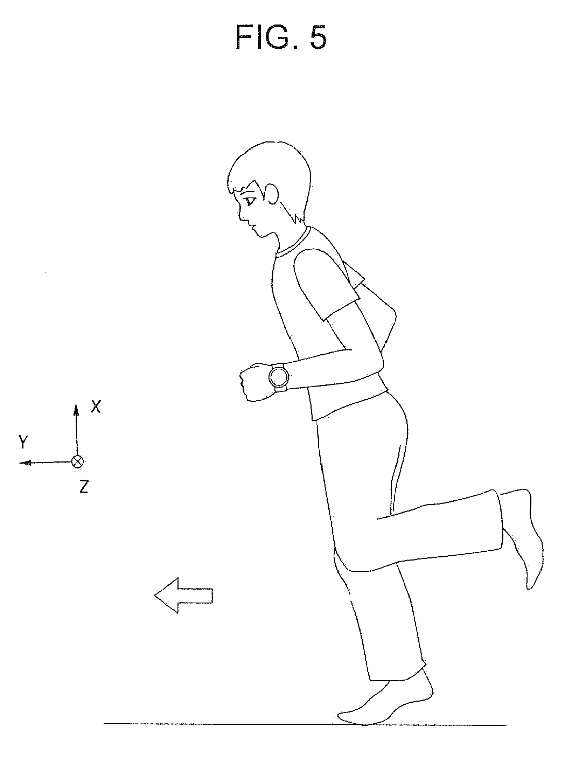

Next, directions of the X-axis direction, the Y-axis direction and the Z-axis direction in the case where the electronic apparatus 100 is worn by the user and the user is running will be explained. FIG. 5 is a schematic view showing directions of the X-axis direction, the Y-axis direction and the Z-axis direction in the case where the electronic apparatus 100 is worn by the user and the user is running in the embodiment. As shown in the drawing, when the electronic apparatus 100 is worn on the user's arm, the direction from the elbow toward the back of the hand is the Y-axis direction, the direction perpendicular to the back of the hand is the Z-axis direction and the direction perpendicular to the plane uniquely determined by the Y-axis direction and the Z-axis direction is the X-axis direction. When the user is running, the direction from the elbow to the wrist is almost directed to a travelling direction as the user swings his/her arms while bending elbows at approximately 90 degrees. Therefore, the Y-axis direction almost corresponds to the horizontal direction as shown in the drawing.

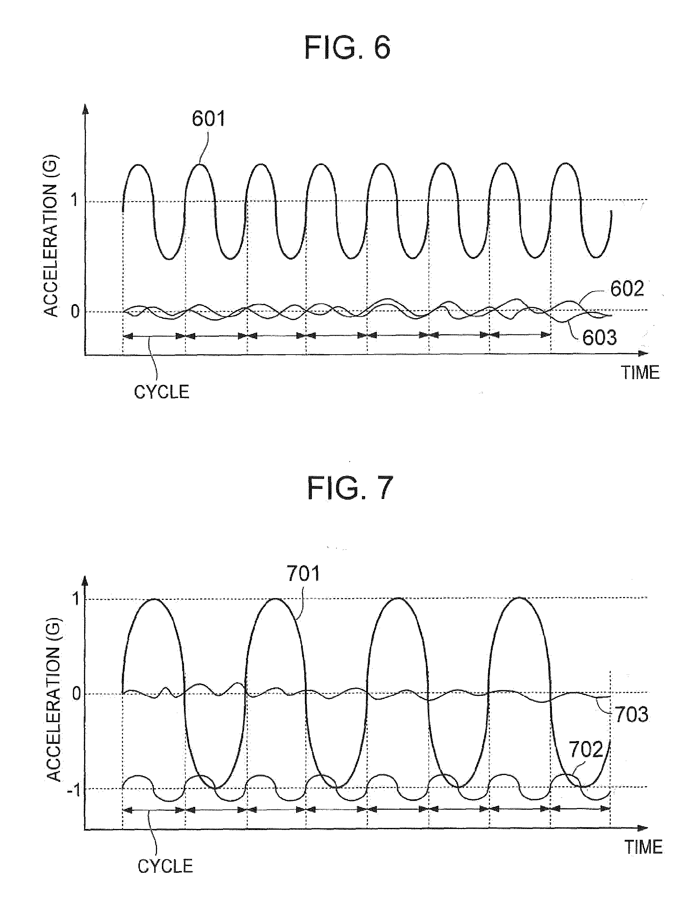

Next, the magnitude of accelerations in the X, Y and Z directions detected by the electronic apparatus 100 will be explained. FIG. 6 is a graph showing the magnitude of accelerations in the X, Y and Z directions detected by the electronic apparatus 100 when the user is walking in the embodiment. In the shown example, the horizontal axis represents the time and the vertical axis represents the magnitude of accelerations [G]. Moreover, a line 601 represents the magnitude of an acceleration y in the Y-axis direction, a line 602 represents the magnitude of an acceleration x in the X-axis direction and a line 603 represents the magnitude of an acceleration z in the Z-axis direction.

When the user is walking, the Y-axis direction almost corresponds to the vertical direction. Accordingly, the acceleration y in the Y-axis direction varies from approximately 0.8G to 1.2G around 1 G in the same cycle as a cycle (pitch) in which the user touches the ground at the time of walking or running as shown in the drawing. The acceleration x in the X-axis direction and the acceleration Z in the Z-axis direction are in the vicinity of 0G regardless of the cycle in which the user touches the ground at the time of walking or running.

Accordingly, the cycle (pitch) in which the user touches the ground at the time of walking or running is the same as the cycle of the acceleration y in the Y-axis direction when the user is walking, therefore, the pitch can be calculated by calculating the cycle of the acceleration y in the Y-axis direction. That is, a "pitch" is equal to "a cycle of the acceleration y in the Y-axis direction." In the embodiment, the CPU 102 detects a timing when the acceleration in the Y-axis direction becomes a given threshold value (first threshold value) or more from the given threshold value (first threshold value) or less (for example, a timing when the acceleration becomes 1.1 G or more from 1.1G or less), calculating the cycle of the acceleration y in the Y-axis direction based on intervals of the timings. A method of calculating the pitch in the above method is referred to as a "method of calculating the pitch at the time of walking". Additionally, the pitch calculated by the "method of calculating the pitch at the time of walking" is referred to as a "first pitch". As components of the acceleration x in the X-axis direction and the acceleration z in the Z-axis direction are small when the user is walking and variation of the acceleration y in the Y-axis direction is large and dominant, it is also preferable but not necessary that the pitch is calculated based on the cycle of a resultant acceleration. That is, the "pitch" is a "cycle of the resultant acceleration". The resultant acceleration can be calculated by using, for example, an expression (1), an expression (2) and the like.
[Expression 1]

$$\sqrt{x^2+y^2+z^2} \quad \ldots (1)$$

[Expression 2]

$$\sqrt{(x^2+y^2)} + |z| \quad \ldots (2)$$

FIG. 7 is a graph showing the magnitude of accelerations in the X, Y and Z directions detected by the electronic apparatus 100 when the user is running in the embodiment. In the shown example, the horizontal axis represents the time and the vertical axis represents the magnitude of accelerations [G]. Moreover, a line 701 represents the magnitude of the acceleration y in the Y-axis direction, a line 702 represents the magnitude of the acceleration x in the X-axis direction and a line 703 represents the magnitude of the acceleration z in the Z-axis direction.

When the user is running, the Y-axis direction almost corresponds to the horizontal direction, and the user swings his/her arms in a front and back direction while bending elbows at approximately 90 degrees. Accordingly, an arm-swing waveform component is added to the acceleration y in the Y-axis direction when the user is running. Therefore, the acceleration in the Y-axis direction varies from approximately 1 G to -1 G around the 0G in the same cycle as a cycle of swinging arms by the user as shown in the drawing. The X-axis direction almost corresponds to the vertical direction when the user is running. Accordingly, the acceleration x in the X-axis direction varies from approximately -0.8G to -1.2G in the same cycle as a cycle of a running timing (pitch) of the user. The acceleration z in the Z-axis direction is in the vicinity of 0G regardless of a walking timing or an arm-swing timing. The running timing (pitch) of the user is the half of the cycle of swinging arms by the user.

Therefore, as the pitch is the same as half of the cycle of the acceleration y in the Y-axis direction when the user is running, the CPU 102 can calculate the pitch by calculating the cycle of the acceleration y in the Y-axis direction. That is, a "pitch" is equal to "the half of the cycle of the acceleration y in the Y-axis direction." In the embodiment, the CPU 102 detects a timing when the acceleration in the Y-axis direction becomes a given threshold value (second threshold value) or more from the given threshold value (second threshold value) or less (for example, a timing when the acceleration becomes 0G or more from 0G or less), calculating the cycle of the acceleration y in the Y-axis direction based on intervals of the timings. A method of calculating the pitch in the above method is referred to as a "method of calculating the pitch at the time of running". Additionally, the pitch calculated by the "method of calculating the pitch at the time of running" is referred to as a "second pitch".

As the CPU 102 calculates the second pitch based on the cycle of swinging arms by the user in the "method of calculating the pitch at the time of running", there is a possibility that the calculated second pitch will be a larger value than the actual running pitch. Accordingly, for example, it is also preferable that a value of the running pitch which is normally impossible is set as a threshold value in advance and the CPU 102 determines a value of the second pitch as an abnormal value when the calculated second pitch exceeds the threshold value. Additionally, when the second pitch determined as the abnormal value continues for a given period of time, there is a possibility that the second pitch which has been determined as the abnormal value is a normal value. Accordingly, in the case where the second pitch determined as the abnormal value continues for a given period of time, the CPU 102 may determine the second pitch as the normal value. As it can be considered that the threshold value is small in such case, for example, the CPU 102 may reset the threshold value to a larger value.

As described above, the relation between the cycle of the acceleration in the Y-axis direction and the pitch of the user differs when the user is walking and when the user is running. Also in the embodiment, the given threshold value in the "method of calculating the pitch at the time of walking" is set to be a value whereby it is difficult to detect the cycle of the acceleration y in the Y-axis direction at the time of running (1.1G in the above example). In the embodiment, the given threshold value in the "method of calculating the pitch at the time of running" is set to a value whereby it is difficult to detect the cycle of the acceleration y in the Y-axis direction at the time of walking (0G in the above example). Therefore, the "first pitch" is larger than the "second pitch" when the user is walking, and the "second pitch" is larger than the "first pitch" when the user is running.

Accordingly, both the "first pitch" and the "second pitch" are calculated in the embodiment and the larger pitch is determined as the pitch of the user. Consequently, when the arm swing becomes hard at the time of running and the arm-swing waveform component is added to the acceleration y in the Y-axis direction, it is possible to measure the pitch more accurately.

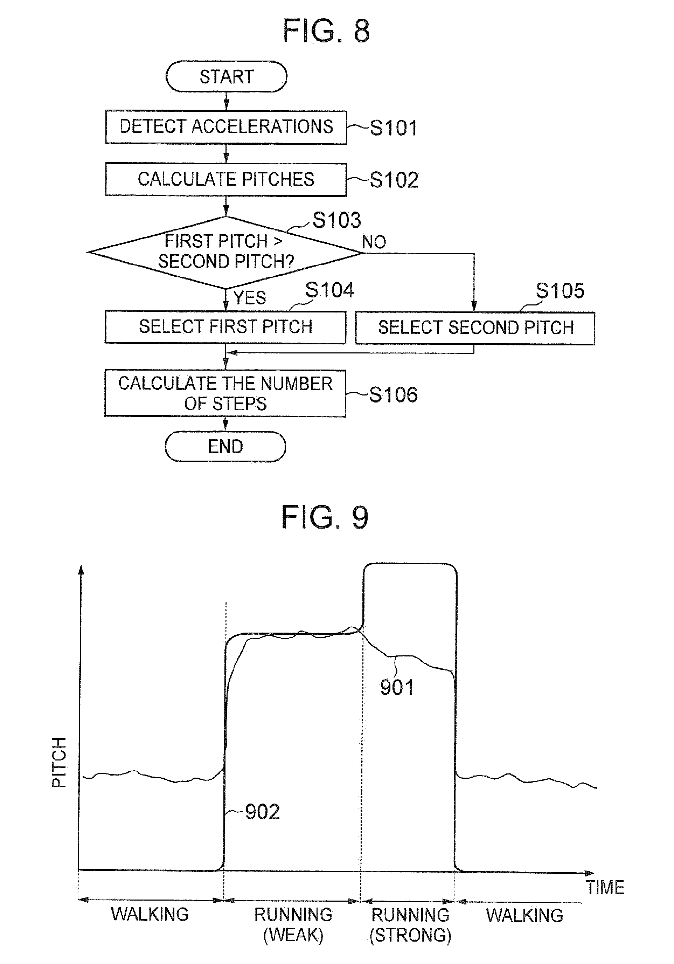

Next, a processing procedure of calculating the pitch by the electronic apparatus 100 will be explained. FIG. 8 is a flowchart showing the processing procedure of calculating pitches by the electronic apparatus 100 in the embodiment.

(Step S101) The acceleration sensors 106 to 108 detect the acceleration x in the X-axis direction, the acceleration y in the Y-axis direction and the acceleration z in the Z-axis direction in a certain period of time. After that, the process proceeds to processing of Step S102. The certain period of time may be determined in advance as well as may be optionally set.

(Step S102) The CPU 102 calculates the "first pitch" by the "method of calculating the pitch at the time of walking" and calculates the "second pitch" by the "method of calculating the pitch at the time of running" based on the accelerations detected in the processing of Step S101. After that, the process proceeds to processing of Step S103.

(Step S103) The CPU 102 determines whether the "first pitch" calculated in the processing of Step S102 is larger than the "second pitch" calculated in the processing of Step S102 or not. When the CPU 102 determines that the "first pitch" calculated in the processing of Step S102 is larger than the "second pitch" calculated in the processing of Step S102, the process proceeds to Step S104. In cases other than the above, the process proceeds to processing of Step S105.

(Step S104) The CPU 102 selects the "first pitch" calculated in the processing of Step S102 as the pitch of the user. After that, the process proceeds to processing of Step S106.

(Step S105) The CPU 102 selects the "second pitch" calculated in the processing of Step S102 as the pitch of the user. After that, the process proceeds to processing of Step S106.

(Step S106) The CPU 106 calculates the number of steps based on the pitch of the user.

For example, the number of steps can be calculated by multiplying the elapsed time by the pitch of the user. After that, the process ends.

FIG. 9 is a graph showing an example of pitches calculated by the electronic apparatus 100 in the embodiment. In the shown example, the horizontal axis represents the time and the vertical axis represents the pitch. Moreover, a line 901 represents the "first pitch" calculated by the "method of calculating the pitch at the time of walking". A line 902 represents the "second pitch" calculated by the "method of calculating the pitch at the time of running". In the shown example, the first pitch is larger than the second pitch at the time of walking. The first pitch and the second pitch are in the approximately the same value at the time of running (weak) (when the arm swing is weak), but the second pitch is larger. Furthermore, the second pitch is larger than the first pitch at the time of running (strong) (when the arm swing is strong).

As described above, the "first pitch" is calculated by the "method of calculating the pitch at the time of walking" and the "second pitch" is calculated by the "method of calculating the pitch at the time of running". Then, the larger pitch in the "first pitch" and the "second pitch" is determined to be the pitch of the user. Accordingly, it is possible to measure the pitch more accurately even when the arm swing becomes hard and the arm swing waveform component is added to the acceleration y in the Y-axis direction.

The entire or part of functions of respective units included in the electronic apparatus 100 in the above embodiment may be realized by recording a program for realizing these functions in recording media readable by a computer, allowing the program recorded in the recording media to be read by a computer system and executing the program. The "computer system" referred to in this case includes hardware such as OS and peripheral equipment.

The "recording media readable by the computer" indicate portable media such as a flexible disc, a magneto-optical disc, a ROM, and a CD-ROM and a storage unit such as hard disk included in the computer system. Moreover, the "recording media readable by the computer" may also include media storing the program dynamically for a short period of time such as a communication line used when transmitting the program through a network such as Internet and a communication line such as a phone line, and media storing the program for a certain period of time such as a volatile memory inside the computer system to be a server or a client in the above case. The above program may realize part of the above functions and may be realized by combination with a program in which the above functions are already recorded in the computer system.

The invention is not limited to the above embodiment, and various modifications may occur within a scope not departing from the scope of the invention. For example, the wrist-watch type electronic apparatus as shown in FIG. 1 has been explained as the example of the electronic apparatus in the above embodiment, however, it is not limited to this, and the invention can be applied to any type of electronic apparatus to be used by being worn on the user's arm. Moreover, although preferred, it is not necessary to provide three accelerometers.

## Claims

1. An electronic apparatus (100) comprising:

an acceleration sensor (106-108) detecting an acceleration and outputting an acceleration signal corresponding to the acceleration;
a first pitch calculation unit (102) for detecting a cycle in which a user touches the ground at the time of walking or running based on the acceleration signal and calculating a first pitch based on the cycle of touching the ground;

a second pitch calculation unit (102) for detecting a cycle in which the user swings his/her arms based on the acceleration signal and calculating a second pitch based on the cycle of swinging arms; and

a pitch determination unit (102) for determining either one of the first pitch and the second pitch which satisfies a given condition as a walking or running pitch of the user.

2. The electronic apparatus according to claim 1, wherein the pitch determination unit is adapted to determine a pitch having the larger number of pitches in the first pitch and the second pitch as the walking or running pitch of the user.

3. The electronic apparatus according to claim 1 or 2, wherein the first pitch calculation unit is adapted to detect an interval in which the acceleration signal exceeds a first threshold value as the cycle of touching the ground and to calculate the cycle of touching the ground as the first pitch, and

the second pitch calculation unit is adapted to detect an interval in which the acceleration signal exceeds a second threshold value as the cycle of swinging arms and to calculate the half of the cycle of swinging arms as the second pitch.

4. The electronic apparatus according to any of claims 1 to 3, further comprising:

a number-of-steps calculation unit (102) for calculating the number of steps based on the walking or running pitch of the user determined by the pitch determination unit.

5. The electronic apparatus according to any of claims 1 to 4,

wherein the second pitch calculation unit is adapted to determine the second pitch as an abnormal value when the calculated second pitch is larger than a given threshold value.

6. The electronic apparatus according to claim 5, wherein the second pitch calculation unit is adapted to determine the second pitch which has been determined as an abnormal value as a normal value and reset the given threshold value when the second pitch which has been determined as the abnormal value continues for a given period of time.

7. A program for allowing a computer having an acceleration sensor to execute the steps of:

(101) detecting an acceleration and outputting an acceleration signal corresponding to the acceleration;

(102) detecting a cycle in which a user touches the ground at the time of walking or running based on the acceleration signal and calculating a first pitch based on the cycle of touching the ground;

(102) detecting a cycle in which the user swings his/her arms based on the acceleration signal and calculating a second pitch based on the cycle of swinging arms; and

(103-105) determining either one of the first pitch and the second pitch which satisfies a given condition as a walking or running pitch of the user.

# FIG. 1

# FIG. 2

# FIG. 3

EP 2 703 781 A2

# FIG. 4

# FIG. 5

# FIG. 6

# FIG. 7

# FIG. 8

START

DETECT ACCELERATIONS ~S101

CALCULATE PITCHES ~S102

S103
FIRST PITCH > SECOND PITCH? NO

YES S104

SELECT FIRST PITCH

S105

SELECT SECOND PITCH

CALCULATE THE NUMBER OF STEPS ~S106

END

# FIG. 9

PITCH

901

902

TIME

WALKING | RUNNING (WEAK) | RUNNING (STRONG) | WALKING

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62223616 A

- JP 2005038018 A